(19) Europäisches Patentamt
European Patent Office
Office européen des brevets

(11) **EP 3 293 592 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **17175170.4**

(22) Anmeldetag: **09.06.2017**

(51) Internationale Patentklassifikation (IPC):
**G05B 19/418** (2006.01)     **B65G 43/10** (2006.01)
**B65G 47/31** (2006.01)

(52) Gemeinsame Patentklassifikation (CPC):
**B65G 43/10; B65G 47/31;** B65G 2201/0285;
B65G 2203/04

(54) **ANSTEUERUNG VON FÖRDERMITTELN**

CONTROL OF CONVEYING MEANS

CONTROLE DE CONVOYEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2016 DE 102016111110**

(43) Veröffentlichungstag der Anmeldung:
**14.03.2018 Patentblatt 2018/11**

(73) Patentinhaber:
• **Deutsche Post AG**
  **53113 Bonn (DE)**
• **TRANSNORM SYSTEM GmbH**
  **31177 Harsum (DE)**

(72) Erfinder:
• **Hartmann, Bernd**
  **53501 Grafschaft-Leimersdorf (DE)**
• **Özyigit, Ali**
  **53177 Bonn (DE)**
• **Ventz, Kai-Ulrich**
  **31139 Hildesheim (DE)**
• **Schällig, René**
  **31134 Hildesheim (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 0 174 168      EP-A1- 2 375 380**
**EP-A1- 3 020 660      EP-A2- 0 245 806**
**WO-A1-2016/082950    WO-A1-2016/108937**
**WO-A2-00/66280        US-A1- 2001 035 332**

**EP 3 293 592 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

GEBIET DER ERFINDUNG

Die vorliegende Erfindung betrifft ein Verfahren, welches insbesondere zur Ansteuerung von Fördermitteln verwendet werden kann. Zudem betrifft die Erfindung ein Computerprogramm für ein solches Verfahren sowie ein System in dem ein solches Verfahren implementiert ist.

HINTERGRUND DER ERFINDUNG

Förderanlagen mit Fördermitteln, wie etwa Förderbänder sind aus der Praxis für eine Vielzahl von Einsatzgebieten bekannt. Förderanlagen können beispielsweise vorgesehen werden, um Objekte wie Stückgüter automatisiert zu transportieren und dabei beispielsweise zu vereinzeln. Anschließend können die vereinzelten Stückgüter sortiert, weiteren Förderbändern zugeführt und/oder in einen Rollcontainer verbracht werden. Stückgüter können dabei zum Beispiel Packstücke, wie Pakete oder Briefe, sein, aber auch andere Gegenstände, wie unverpackte Waren oder Zwischenprodukte.

Zum Beispiel offenbart WO 0 066 280 A2 ein Verfahren, umfassend: Ermitteln von erster Geometrieinformation eines ersten Objektstroms von mehreren Objekten, welche auf einem ersten Fördermittel transportiert werden; und Ermitteln von zweiter Geometrieinformation eines zweiten Objektstroms von mehreren Objekten, welche auf einem zweiten Fördermittel transportiert werden; wobei das erste Fördermittel dazu eingerichtet ist, Objekte mit einer ersten Geschwindigkeit zu transportieren, und das zweite Fördermittel dazu eingerichtet ist, Objekte mit einer zweiten Geschwindigkeit zu transportieren, wobei das erste Fördermittel und das zweite Fördermittel derart angeordnet sind, dass die von dem ersten Fördermittel transportierten Objekte auf das zweite Fördermittel übergehen; und wobei das Verfahren ferner ein Einstellen der ersten Geschwindigkeit des ersten Fördermittels und/oder ein Einstellen der zweiten Geschwindigkeit des zweiten Fördermittels basierend auf der ermittelten ersten Geometrieinformation und/oder der ermittelten zweiten Geometrieinformation umfasst.

Packstücke können in der Logistik in Fahrzeugen als Schüttgut transportiert sowie in Anlagenteilen einer Förderanlage als Schüttgut gespeichert werden. Moderne Verfahren der Entladetechnik erlauben auch eine effiziente Entladung von Wechselbehältern mit Packstücken derart, dass Packstücke der Fördertechnik als Schüttgut zugeführt werden können. Schüttgut in der Logistik kann dabei im Wesentlichen in drei Klassen eingeteilt werden: 3D-Bulk, 2D-Bulk und 1D-Bulk. Bei einem 3D-Bulk liegen Packstücke über- bzw. untereinander, nebeneinander und vor- bzw. hintereinander in ungeordneter Folge. Bei einem 2D-Bulk liegen Packstücke nebeneinander und vor- bzw. hintereinander in ungeordneter Reihenfolge, aber nicht über- bzw. untereinander. Bei einem 1D-Bulk liegen Packstücke hintereinander in ungeordneter Reihenfolge, aber nicht nebeneinander, oder unter- bzw. übereinander. Packstücke liegen hintereinander insbesondere genau dann, wenn sich im Wesentlichen keine zwei Packstücke aus seitlicher Betrachtung (rechtwinklig zur Förderrichtung) überdecken. Dabei spielt der Abstand zwischen den Packstücken keine Rolle. Packstücke gelten darüber hinaus insbesondere als vereinzelt, wenn sie im 1D-Bulk oder 2D-Bulk mit Zwischenabstand größer Null angeordnet sind.

Der Transport erfolgt in vielen Förderanlagen zunächst als 3D-Bulk oder als 2D-Bulk. In den meisten Bereichen von Förderanlagen erfolgt der Transport von Packstücken dann aber als Stückgutstrom, also als 1D-Bulk, da nur so das individuelle Packstück seiner Endstelle im System zugeführt werden kann.

Problematisch ist dabei, dass die Packstücke in der Regel als 3D-Bulk in die Förderanlage eingebracht werden sollen und dann einem Vereinzelungsprozess (Singulation) unterworfen werden müssen, um aus dem 3D-Bulk zunächst ein 2D-Bulk und schließlich einen 1D-Bulk erzeugen. Es besteht das Bedürfnis diesen Prozess möglichst zu optimieren, um einen hohen Durchsatz von Packstücken zu erzielen. Dies kann vergleichsweise aufwendig sein und von vielen Faktoren abhängen, welche jedoch nicht immer vorhergesehen werden können. Beispielsweise können in dem 3D-Bulk Packstücke der unterschiedlichsten Größen in unterschiedlichsten Anordnungen und Reihenfolgen vorliegen.

ALLGEMEINE BESCHREIBUNG

Eine der Aufgaben der Erfindung besteht darin, eine besonders effiziente Nutzung einer Förderanlage zu ermöglichen und insbesondere den Durchsatz zu optimieren.

Die Aufgabe wird gelöst durch das in Anspruch 1 definierte Verfahren, das in Anspruch 28 definierte System und das in Anspruch 30 definierte Computerprogramm. Vorteilhafte Ausgestaltungen ergeben sich aus den abhängigen Ansprüchen.

Das Verfahren nach der Erfindung umfasst ein Ermitteln von erster Geometrieinformation eines ersten Objektstroms von mehreren Objekten, welche auf einem ersten Fördermittel transportiert werden. Das Verfahren umfasst ferner ein Ermitteln von zweiter Geometrieinformation eines zweiten Objektstroms von mehreren Objekten, welche auf einem zweiten Fördermittel transportiert werden. Das erste Fördermittel ist dazu eingerichtet, Objekte mit einer ersten Geschwindigkeit zu transportieren, und das zweite Fördermittel ist dazu eingerichtet, Objekte mit einer zweiten Geschwindigkeit zu transportieren. Das erste Fördermittel und das zweite Fördermittel sind derart angeordnet, dass die von dem ersten Fördermittel transportierten Objekte durch Fallen von dem ersten Fördermittel auf das zweite Fördermittel unter Einwirkung der Schwerkraft übergehen. Das Verfahren umfasst ferner ein Einstellen der ersten Geschwindigkeit des ersten Fördermittels und/oder ein Einstellen der zweiten Geschwindigkeit des zweiten Fördermittels basierend auf der ermittelten ersten Geometrieinformation und/oder der ermittelten zweiten Geometrieinformation. Die erste Geometrieinformation umfasst eine erste Höheninformation des ersten Objektstroms umfasst, und die zweite Geometrieinformation umfasst eine zweite Höheninformation des zweiten Objektstroms.

Das System nach der Erfindung umfasst eine Vorrichtung, die Mittel zum Veranlassen des erfindungsgemäßen Verfahrens umfasst, sowie das erste Fördermittel und das zweite Fördermittel, und Erfassungsmittel angeordnet zum Erfassen der ersten und der zweiten Geometrieinformationen. Das System kann beliebige weitere Elemente umfassen.

Das Computerprogramm nach der Erfindung umfasst Programmanweisungen, die dazu eingerichtet sind, ein erfindungsgemäßes System zu veranlassen, das erfindungsgemäße Verfahren durchzuführen, wenn sie von mindestens einem Prozessor ausgeführt werden.

Das Computerprogramm kann in einem gegenständlichen computerlesbaren Medium gespeichert sein, etwa in einem flüchtigen oder nicht-flüchtigen Programmspeicher einer Vorrichtung oder auf einem Speicherchip oder Memorystick. Es kann aber auch über das Internet und/oder über drahtgebundene Leitungen übertragen werden.

Es hat sich gezeigt, dass das beschriebene Ermitteln von erster und zweiter Geometrieinformation und die Verwendung der ermittelten ersten und zweiten Geometrieinformation zur Geschwindigkeitseinstellung ermöglichen, den Durchsatz einer Förderanlage zu steigern und/oder in Abhängigkeit eines erwünschten Durchsatzes einer Förderanlage einzustellen. Dabei wird sich zunutze gemacht, dass nicht unbedingt Informationen über jedes einzelne Objekt eines Objektstroms ermittelt werden müssen, sondern vielmehr eine Geometrieinformation des die Objekte umfassenden Objektstroms ermittelt werden. Indem schließlich Geometrieinformation vor und nach dem Übergang von dem ersten auf das zweite Fördermittel zur Geschwindigkeitseinstellung der Fördermittel verwendet werden, kann eine gewünschte Verteilung der Objekte im zweiten Objektstrom effizient erreicht werden.

Es hat sich insbesondere gezeigt, dass durch das Verfahren eine Vermeidung von zu großen und zu kleinen Lücken oder Abständen zwischen den Objekten des zweiten Objektstroms erreicht werden kann, was zu einer Steigerung des Durchsatzes beiträgt.

Die jeweilige Geometrieinformation wird beispielsweise mit Hilfe von Erfassungsmitteln ermittelt. Die Erfassungsmittel können grundsätzlich beliebig gewählt werden, sofern diese dazu geeignet sind, die jeweilige Geometrieinformation oder Informationen, aus denen die jeweilige Geometrieinformation ermittelt werden kann, zu erfassen. Vorteilhaft können die Erfassungsmittel beispielsweise laserbasierte Sensoren (LMS), Time-of-Flight-Sensoren (TIM-Sensor) und/oder bildbasierte Sensoren umfassen, um nur einige Beispiele zu nennen. Die Erfassungsmittel können auch noch weitere Sensoren umfassen und/oder dazu eingerichtet sein, weitere Informationen zu ermitteln.

Beispielsweise umfasst die jeweilige Geometrieinformation Oberflächeninformation und Höheninformation des jeweiligen Objektstroms. Die jeweilige Geometrieinformation umfasst beispielsweise Information repräsentativ für eine Oberflächencharakteristik des jeweiligen Objektstroms. Beispielsweise umfasst die jeweilige Geometrieinformation Information repräsentativ für eine Oberflächenstruktur der Oberfläche. Beispielsweise umfasst die jeweilige Geometrieinformation Information repräsentativ für eine geometrische Eigenschaft der Oberfläche, beispielsweise die Größe der jeweiligen Oberfläche.

Während insbesondere bei dem ersten Objektstrom, in dem die Objekte beispielsweise als 3D-Bulk vorliegen, eine Geometrieinformation lediglich den Objektstrom selbst beschreiben kann, kann beispielsweise bei dem zweiten Objektstrom, in dem die Objekte beispielsweise bereits als vereinzelte Objekte in einem 2D-Bulk vorliegen, eine Geometrieinformation auch einzelne Objekte des Objektstroms beschreiben.

Die jeweiligen Geometrieinformationen werden bevorzugt über einen (vorbestimmten) Zeitraum erfasst, in dem sich die Objekte des jeweiligen Objektstroms weiter bewegen. Die jeweiligen Geometrieinformationen werden beispielsweise jeweils in einem oder mehreren bestimmten räumlichen Abschnitten oder Segmenten des jeweiligen Objektstroms erfasst.

Darunter, dass die Objekte von dem ersten Fördermittel auf das zweite Fördermittel übergehen, wird verstanden, dass die Objekte (unter anderem) unter Einwirkung der Schwerkraft von dem ersten auf das zweite Fördermittel gelangen. Beispielsweise können die Objekte von dem ersten Fördermittel auf das zweite Fördermittel abkippen oder abrutschen. Die Objekte fallen von dem ersten Fördermittel auf das zweite Fördermittel. Dabei können die Objekte sich (kurzzeitig) im freien Fall befinden. Beispielsweise sind das erste und das zweite Fördermittel Teil einer Förderanlage, welche insbesondere noch weitere Fördermittel aufweisen kann.

Das Einstellen der jeweiligen Geschwindigkeit kann durch geeignete Ansteuermittel erfolgen. Aufgrund der Rückwirkung der eingestellten Geschwindigkeit auf den jeweiligen Objektstrom kann die jeweilige Geschwindigkeit somit geregelt werden.

In einer beispielhaften Ausführungsform ist oder umfasst das beschriebene Verfahren eine adaptive Regelung zur Einstellung der ersten und/oder zweiten Geschwindigkeit. Somit können die jeweiligen Fördermittel effizient mittels einer adaptiven Regelung angesteuert werden.

Beispielsweise wird basierend auf der ersten und/oder zweiten Geometrieinformation (nur oder zumindest) die erste Geschwindigkeit eingestellt, beispielsweise um die Zufuhr von Objekten aus dem ersten Objektstrom in den zweiten Objektstrom einzustellen. Beispielsweise wird basierend auf der ersten und/oder zweiten Geometrieinformation (nur oder zumindest) die zweite Geschwindigkeit eingestellt, beispielsweise um die Abfuhr von Objekten in dem zweiten Objektstrom einzustellen. Bevorzugt wird basierend auf der ersten und/oder zweiten Geometrieinformation sowohl die erste als auch die zweite Geschwindigkeit eigestellt. Insbesondere kann die Differenz und/oder das Verhältnis zwischen der ersten und der zweiten Geschwindigkeit eingestellt werden. Die Differenz oder das Verhältnis von erster zu zweiter Geschwindigkeit kann zwar dynamisch angepasst werden. Bevorzugt bleibt die Differenz oder das Verhältnis von erster zu zweiter Geschwindigkeit jedoch im Wesentlichen konstant. In diesem Fall wird dann sowohl die erste als auch die zweite Geschwindigkeit eingestellt. Beispielsweise ist die Differenz oder das Verhältnis von erster zu zweiter Geschwindigkeit innerhalb einer $\varepsilon$-Umgebung (Epsilon-Umgebung) gültig. Innerhalb dieser Umgebung ist der Algorithmus zum Einstellen der ersten und/oder zweiten Geschwindigkeit stabil gemäß Ljapunow. Das Grundprinzip der Stabilität gemäß Ljapunow innerhalb einer e-Umgebung ist dem Fachmann im Bereich Regelungstechnik bekannt, wie beispielsweise aus dem Fachbuch "Nonlinear Systems", Hassan K. Khalil, 2. Auflage, Verlag Prentice-Hall, ISBN 0132280248, Abschnitt 10.1.3.

Wird die erste und/oder zweite Geschwindigkeit lediglich auf Basis einer (beispielsweise der ersten) Geometrieinformation eingestellt, kann die andere (beispielsweise die zweite) ermittelte Geometrieinformation vorteilhaft dazu dienen, die Einstellung zu überprüfen, beispielsweise indem geprüft wird, ob eine erwartete Verteilung der Objekte in dem zweiten Objektstrom erfolgt.

Im Rahmen dieser Anmeldung soll darunter, dass etwas basierend auf etwas erfolgt oder dass etwas auf etwas basiert, verstanden werden, dass es zumindest teilweise darauf basierend erfolgt bzw. basiert.

In einer beispielhaften Ausführungsform ist das erste Fördermittel dazu eingerichtet, die Objekte des ersten Objektstroms an ein Ende des ersten Fördermittels zu transportieren und die Objekte am Ende des ersten Fördermittels auf das zweite Fördermittel übergehen. Das erste und das zweite Fördermittel können beispielsweise unter Bildung einer Stufe hintereinander angeordnet sein.

In einer beispielhaften Ausführungsform umfasst der erste Objektstrom Objekte, welche zumindest teilweise aufeinander und/oder nebeneinander auf dem ersten Fördermittel transportiert werden. Bevorzugt werden die Objekte des ersten Objektstroms sowohl aufeinander als auch nebeneinander auf dem ersten Fördermittel transportiert (3D-Bulk). Beispielsweise weist der erste Objektstrom die Form eines sogenannten breithohen Bulks auf, das heißt ein im Querschnitt im Wesentlichen rechteckiger Objektstrom. Beispielsweise weist der erste Objektstrom die Form eines sogenannten breit-gehäuften Bulks auf, das heißt ein im Querschnitt im Wesentlichen nach oben schmaler werdenden Bulks auf. Grundsätzlich ist aber auch denkbar, dass die Objekte des ersten Objektstroms lediglich aufeinander und hintereinander, jedoch im Wesentlichen nichtnebeneinander auf dem ersten Fördermittel transportiert werden. Beispielsweise weist der erste Objektstrom dann die Form eines sogenannten schmalgehäuften Bulks auf. Die Objekte gehäufter Bulks können durch das beschriebene Verfahren effizient vereinzelt werden, auch ohne Geometrieinformation einzelner Objekte des Bulks ermitteln zu müssen.

In einer beispielhaften Ausführungsform sind das erste Fördermittel und das zweite Fördermittel derart angeordnet, dass im ersten Objektstrom auf dem ersten Fördermittel aufeinander transportierte Objekte durch das Übergehen auf das zweite Fördermittel derart verteilt werden können, dass diese zuvor im ersten Objektstrom aufeinander transportierten Objekte im zweiten Objektstrom auf dem zweiten Fördermittel zumindest teilweise nicht mehr aufeinander transportiert werden. Bevorzugt werden die Objekte derart verteilt, dass keines der zuvor im ersten Objektstrom aufeinander transportierten Objekte im zweiten Objektstrom auf dem zweiten Fördermittel mehr aufeinander transportiert wird.

In einer beispielhaften Ausführungsform werden im zweiten Objektstrom die Objekte im Wesentlichen nebeneinander und/oder hintereinander auf dem zweiten Fördermittel transportiert. Bevorzugt werden die Objekte im zweiten Objektstrom nebeneinander und hintereinander auf dem zweiten Fördermittel transportiert (2D-Bulk). Beispielsweise weist der zweite Objektstrom die Form eines sogenannten breitflächigen Bulks auf, in dem Objekte bevorzugt vereinzelt, also beabstandet, sind. Hieran anschließend werden die Objekte bevorzugt in einen 1D-Bulk überführt. Ebenfalls ist jedoch denkbar, dass die Objekte im zweiten Objektstrom bereits ausschließlich hintereinander auf dem zweiten Fördermittel transportiert werden.

In einer beispielhaften Ausführungsform umfasst die erste Geometrieinformation eine erste Oberflächeninformation, insbesondere repräsentativ für eine Größe der Oberfläche des ersten Objektstroms und/oder die zweite Geometrieinformation eine zweite Oberflächeninformation, insbesondere repräsentativ für eine Größe der Oberfläche des zweiten Objektstroms. Beispielsweise ist oder umfasst die erste und/oder zweite Oberflächeninformation die Oberfläche des jeweiligen Objektstroms. Dabei wird beispielsweise die Oberfläche eines bestimmten Abschnitts oder Segments des Objektstroms ermittelt.

In einer beispielhaften Ausführungsform umfasst die erste Geometrieinformation eine erste Ausdehnungsinformation des ersten Objektstroms und/oder die zweite Geometrieinformation eine zweite Ausdehnungsinformation des zweiten Objektstroms. Die Ausdehnungsinformation bezieht sich insbesondere auf eine Ausdehnung des jeweiligen Objektstroms quer zum jeweiligen Objektstrom. Beispielsweise ist die Ausdehnungsinformation repräsentativ für die Breite, die Querschnittsfläche und/oder den Durchmesser des jeweiligen Objektstroms.

In einer beispielhaften Ausführungsform ist die erste und/oder die zweite Ausdehnungsinformation repräsentativ für einen Durchmesser des jeweiligen Objektstroms. Beispielsweise ist die jeweilige Ausdehnungsinformation ein Durchmesser des jeweiligen Objektstroms. Beispielsweise handelt es sich um den Durchmesser entlang einer bestimmten Achse oder den mittleren Durchmesser.

In einer beispielhaften Ausführungsform umfasst das Verfahren weiterhin Ermitteln eines ersten Verhältnisses von Oberfläche zu Durchmesser des ersten Objektstroms basierend auf der ersten Oberflächeninformation und der ersten Ausdehnungsinformation, Ermitteln eines zweiten Verhältnisses von Oberfläche zu Durchmesser des zweiten Objektstroms basierend auf der zweiten Oberflächeninformation und der zweiten Ausdehnungsinformation, wobei das Einstellen der ersten Geschwindigkeit des ersten Fördermittels und/oder das Einstellen der zweiten Geschwindigkeit des zweiten Fördermittels auf dem ermittelten ersten Verhältnis und auf dem ermittelten zweiten Verhältnis basiert.

Dadurch, dass ein Einstellen der ersten Geschwindigkeit und/oder der zweiten Geschwindigkeit zusätzlich auf dem ermittelten ersten und/oder zweiten beschriebenen Verhältnis basiert, kann das Einstellen der Geschwindigkeit weiter optimiert und damit der Durchsatz einer Förderanlage letztendlich weiter gesteigert werden. Dabei hat sich gezeigt, dass die Verwendung des Verhältnisses der Oberfläche zum Durchmesser eines Objektstroms als Eingangswert zur Steuerung oder Regelung der jeweiligen Geschwindigkeit der Fördermittel vorteilhaft verwendet werden kann, um einen gesteigerten Durchsatz zu erreichen.

Vorteilhaft kann das Einstellen der jeweiligen Geschwindigkeit basierend auf dem ermittelten ersten Verhältnis und basierend auf dem ermittelten zweiten Verhältnis eine Regelung darstellen. Hingegen kann das bereits beschriebene Einstellen der jeweiligen Geschwindigkeit basierend auf der ermittelten ersten Oberflächeninformation und der ermittelten zweiten Oberflächeninformation eine bei der Regelung einzuhaltende Bedingung darstellen.

In einer beispielhaften Ausführungsform basiert das Einstellen der ersten Geschwindigkeit und/oder das Einstellen der zweiten Geschwindigkeit auf einem Vergleich der Oberfläche des zweiten Objektstroms mit der Oberfläche des ersten Objektstroms. Beispielsweise wird das Einstellen der ersten Geschwindigkeit und/oder das Einstellen der zweiten Geschwindigkeit dadurch beeinflusst, dass ermittelt wird, ob sich die Oberfläche des zweiten Objektstroms im Vergleich zu der Oberfläche des ersten Objektstroms verändert, insbesondere vergrößert.

Wird beispielsweise ermittelt, dass sich die Oberfläche vom ersten zum zweiten Objektstrom (ausreichend) vergrößert, kann dies als Zeichen dafür gesehen werden, dass die Objekte (ausreichend) vereinzelt werden. Die erste und/oder die zweite Geschwindigkeit können dann so eingestellt werden, dass weiterhin eine Zufuhr von Objekten von dem ersten Objektstrom in den zweiten Objektstrom erfolgen kann. Beispielsweise werden die Geschwindigkeiten beibehalten. Wird beispielsweise hingegen ermittelt, dass sich die Oberfläche vom ersten zum zweiten Objektstrom nicht (oder nicht ausreichend) vergrößert, kann dies als Zeichen dafür gesehen werden, dass die Objekte nicht (oder nicht ausreichend) vereinzelt werden. Die erste und/oder die zweite Geschwindigkeit können dann so eingestellt werden, dass eine Zufuhr von Objekten aus dem ersten Objektstrom in den zweiten Objektstrom (zweitweise) verringert oder unterbunden wird. Beispielsweise ist denkbar, dass die Geschwindigkeitsdifferenz erhöht wird, insbesondere unter Beibehaltung des Verhältnisses von der ersten Geschwindigkeit zur zweiten Geschwindigkeit. Beispielsweise wird hierzu die erste Geschwindigkeit verringert. Ebenfalls ist denkbar, dass die zweite Geschwindigkeit erhöht wird.

Ein Ermitteln, ob sich die Oberfläche vergrößert, kann beispielsweise dadurch festgestellt werden, dass die Größen der jeweiligen Oberflächen selbst verglichen wird. Zum anderen ist aber auch denkbar, dass die Rauigkeit der Oberflächen verglichen wird, wobei bei einer Vergrößerung der Rauigkeit auf eine Vergrößerung der Oberfläche geschlossen werden kann. Die Rauigkeit kann beispielsweise basierend auf einem Frequenzspektrum von einer den jeweiligen Objektstrom beschreibenden Hüllkurve abgeleitet werden.

In einer beispielhaften Ausführungsform basiert das Einstellen der ersten Geschwindigkeit und/oder das Einstellen der zweiten Geschwindigkeit auf einem Vergleich des Verhältnisses der Oberfläche zum Durchmesser des ersten Objektstroms zu dem Verhältnis der Oberfläche zum Durchmesser des zweiten Objektstroms. Beispielsweise wird das Einstellen der ersten Geschwindigkeit und/oder das Einstellen der zweiten Geschwindigkeit dadurch beeinflusst, dass ermittelt wird, ob sich das Verhältnis der Oberfläche zum Durchmesser des ersten Objektstroms im Vergleich zu dem Verhältnis der Oberfläche zum Durchmesser des zweiten Objektstroms verändert, insbesondere verkleinert.

Das jeweilige Verhältnis der Oberfläche zum Durchmesser kann dabei vorteilhaft aus der bereits beschriebenen Oberflächeninformation und der bereits beschriebenen Ausdehnungsinformation erhalten werden.

Nach der Erfindung umfasst die erste Geometrieinformation eine erste Höheninformation, insbesondere ein Höhenprofil, des ersten Objektstroms, und die zweite Geometrieinformation umfasst eine zweite Höheninformation, insbesondere ein Höhenprofil, des zweiten Objektstroms. Beispielsweise ist die Höheninformation des ersten Objektstroms repräsentativ für die Höhe des Objektstroms, während die Höheninformation des zweitem Objektstroms aufgrund einer im Optimalfall bereits erfolgten Vereinzelung der Objekte insbesondere repräsentativ für die Höhe einzelner Objekte des Objektstroms sein kann.

In einer beispielhaften Ausführungsform ist die erste Ausdehnungsinformation repräsentativ für eine Breite des ersten Objektstroms und/oder die zweite Ausdehnungsinformation repräsentativ für eine Breite des zweiten Objektstroms. Beispielsweise lässt sich die Ausdehnungsinformation repräsentativ für die Breite des jeweiligen Objektstroms aus der Höheninformation, insbesondere dem Höhenprofil bestimmen. So kann sich beispielsweise aus einem Höhenprofil quer zur Transportrichtung sowohl die Höhe als auch die Breite des Objektstroms ableiten lassen. Aus diesen Informationen lässt sich insbesondere die Querschnittsfläche des jeweiligen Objektstroms ableiten. Wie bereits ausgeführt, ist ebenfalls denkbar, dass die Ausdehnungsinformation repräsentativ für die Querschnittsfläche des entsprechenden Objektstroms ist.

In einer beispielhaften Ausführungsform basiert das Einstellen der ersten Geschwindigkeit des ersten Fördermittels und/oder ein Einstellen der zweiten Geschwindigkeit des zweiten Fördermittels auf der ersten Höheninformation des ersten Objektstroms und der ersten Ausdehnungsinformation repräsentativ für eine Breite des ersten Objektstroms. Wie bereits ausgeführt, kann dabei beispielsweise eine Geometrieinformation erfasst werden, welche ein Höhenprofil umfasst, aus dem sowohl die Höhe als auch die Breite (und damit die Querschnittsfläche) des entsprechenden Objektstroms ermittelt werden kann. Ebenfalls ist denkbar, dass auf Basis der Höheninformation, beispielsweise einem Höhenprofil, eine Ausdehnungsinformation repräsentativ für die Querschnittsfläche des Objektstroms ermittelt wird und das Einstellen der jeweiligen Geschwindigkeit hierauf beruht.

Dies beruht auf der Überlegung, dass angenommen werden kann, dass ein Volumenstrom V' eines Objektstroms (z.B. des ersten oder zweiten Objektstroms) sich auch der Breite $B$, der Höhe $H$ und der Geschwindigkeit v des entsprechenden Objektstroms ergibt

$$V' = B \cdot H \cdot v$$

Ebenfalls lässt sich der Volumenstrom als Produkt aus Durchsatz Q der einzelnen Objekte und dem Volumen $V_n$ eines Objekts des Objektstroms beschreiben

$$V' = Q \cdot V_n$$

Damit lässt sich die Geschwindigkeit ausdrücken als

$$v = Q \cdot V_n / (B \cdot H) \tag{1}$$

Somit lässt sich die eine Geschwindigkeit (zum Beispiel die erste Geschwindigkeit) basierend auf der ermittelten (ersten) Geometrieinformation, beispielsweise der Höhe $H$ und der Breite $B$ oder der Querschnittsfläche $B \cdot H$ einstellen.

In einer beispielhaften Ausführungsform basiert das Einstellen der ersten Geschwindigkeit des ersten Fördermittels und/oder das Einstellen der zweiten Geschwindigkeit des zweiten Fördermittels auf einer Annahme einer Größe eines oder mehrerer Objekte des ersten Objektstroms. Insbesondere kann eine Annahme einer Größe der Objekte eine Annahme oder Vermutung über die Maße oder das Volumen der Objekte sein. Diese Annahme kann später bei ausreichender Vereinzelung der Objekte überprüft werden. Durch die Annahme einer Größe eines oder mehrerer Objekte kann eine Annahme über $V_n$ in obigem Ausdruck (1) getroffen werden, ohne $V_n$ messen zu müssen.

In einer beispielhaften Ausführungsform basiert das Einstellen der ersten Geschwindigkeit des ersten Fördermittels und/oder das Einstellen der zweiten Geschwindigkeit des zweiten Fördermittels auf einem geforderten Durchsatz der Objekte. Ein geforderter Durchsatz ist beispielsweise die eine Anzahl der Objekte pro Zeit, beispielsweise die Anzahl von Packstücken pro Minute. Durch das Einbeziehen eines geforderten Durchsatzes kann die Geschwindigkeit v in Abhängigkeit von der Größe Q in obigem Ausdruck (1) bestimmt werden.

In einer beispielhaften Ausführungsform umfasst die zweite Geometrieinformation eine Größeninformation eines oder mehrerer Objekte des zweiten Objektstroms. Mittels der Größeninformation kann die zuvor getroffene Annahme über die Größe eines oder mehrerer Objekte verifiziert werden. Die ist möglich, da die Objekte im zweiten Objektstrom ausreichend vereinzelt sind und durch die ermittelte zweite Geometrieinformation entsprechende Größeninformation erhalten werden kann.

Zudem kann in obigem Ausdruck (1) $V_n$ durch

$$V_n = a \cdot b \cdot h$$

ersetzt werden, mit Länge *a,* Breite 6 und Höhe *h* eines Objekts. Unter der Annahme, dass der zweite Objektstrom ein 2D-Bulk ist, also nur eine Objektlage aufweist, ist H = h, sodass sich für die Geschwindigkeit

$$v = Q \cdot a \cdot b \,/\, B$$

ergibt. Somit kann die erste und/oder die zweite Geschwindigkeit insbesondere basierend auf den Objektabmessungen und/oder eines geforderten Durchsatzes eingestellt werden. Ebenfalls kann die erste und/oder die zweite Geschwindigkeit insbesondere basierend auf einer geforderten Lückenverteilung in zweiten Objektstrom eingestellt werden.

In einer beispielhaften Ausführungsform umfasst das Verfahren weiterhin ein Ermitteln einer Information repräsentativ für eine Flächenbelegung des ersten und/oder des zweiten Fördermittels. Dies kann der Kontrolle einer gewünschten Flächenbelegung dienen. Beispielsweise kann, wenn die Flächenbelegung nicht der gewünschten Flächenbelegung entspricht, ein Einstellen der ersten und/oder die zweiten Geschwindigkeit beeinflusst werden.

Beispielhaft kann zudem eine Durchschnittshöhe des ersten und/oder zweiten Objektstroms ermittelt werden. Insbesondere kann ein Vergleichen der Durchschnittshöhe des ersten und des zweiten Objektstroms erfolgen. Verändert sich die Durchschnittshöhe vom ersten zum zweiten Objektstrom nicht oder nicht ausreichend, kann darauf geschlossen werden, dass keine ausreichende Vereinzelung erfolgt. Nimmt die Durchschnittshöhe vom ersten zum zweiten Objektstrom (ausreichend) ab, kann hingegen auf eine (ausreichende) Vereinzelung geschlossen werden. Ein derartiger Vergleich kann ebenfalls ein Einstellen der ersten und/oder die zweiten Geschwindigkeit beeinflussen.

In einer beispielhaften Ausführungsform umfasst das Verfahren weiterhin ein Ermitteln eines Durchsatzes der Objekte. Wie bereits ausgeführt, ist unter einem Durchsatz insbesondere eine Anzahl von Objekten pro Zeit zu verstehen. Der Durchsatz wird bevorzugt nach dem Übergehen auf das zweite Fördermittel ermittelt. Beispielsweise kann der Durchsatz auch nach dem zweiten Fördermittel ermittelt werden.

In einer beispielhaften Ausführungsform bleibt das Verhältnis der ersten Geschwindigkeit des ersten Fördermittels zur zweiten Geschwindigkeit des zweiten Fördermittels im Wesentlichen konstant. Die erste und die zweite Geschwindigkeit werden so eingestellt, dass ein konstantes Verhältnis der ersten Geschwindigkeit des ersten Fördermittels zur zweiten Geschwindigkeit des zweiten Fördermittels entsteht. Unter einem im Wesentlichen konstanten Verhältnis wird verstanden, dass beispielsweise eine Abweichung von 5% von einer vorgegebenen Geschwindigkeit toleriert wird.

In einer beispielhaften Ausführungsform liegt das Verhältnis der ersten Geschwindigkeit des ersten Fördermittels zur zweiten Geschwindigkeit des zweiten Fördermittels zwischen 1:1,5 und 1:3, vorzugsweise bei im Wesentlichen 1:2. Es hat sich herausgestellt, dass ein Verhältnis in diesem Bereich eine effiziente Nutzung einer Förderanlage ermöglicht und insbesondere die Optimierung des Durchsatzes ermöglicht.

In einer beispielhaften Ausführungsform basiert das Einstellen der ersten und/oder zweiten Geschwindigkeit auf einer Berechnung und/oder einer Umsetzungstabelle. Basiert das Einstellen der Geschwindigkeit auf einer Berechnung, kann diese für beliebige Fälle präzise eingestellt werden. Basiert das Einstellen der Geschwindigkeit auf einer Umsetzungstabelle, kann auf Basis hinterlegter Parameter eine Geschwindigkeitsermittlung erfolgen. Insbesondere können in der Umsetzungstabelle Parameter in Abhängigkeit verschiedener Objektkategorien (beispielsweise Objektgrößen) hinterlegt sein.

In einer beispielhaften Ausführungsform wird durch das Einstellen der ersten und/oder der zweiten Geschwindigkeit gezielt eine Abstandsverteilung zwischen den Objekten des zweiten Objektstroms eingestellt. Es hat sich gezeigt, dass für den Durchsatz einer Förderanlage insbesondere die Abstands- oder Lückenverteilung zwischen den Objekten relevant ist. Dabei sind nicht nur zu große Abstände oder Lücken sondern auch zu kleine Abstände oder Lücken zwischen den Objekten nachteilig.

In einer beispielhaften Ausführungsform werden die erste und/oder die zweite Geschwindigkeit so eingestellt, dass der Abstand zwischen jeweils zwei benachbarten Objekten des zweiten Objektstroms für einen Großteil der Objekte zwischen 0,5m und 7m, vorzugsweise zwischen 1m und 6m, besonders bevorzugt zwischen 1,2m und 5m liegt. Unter einem Großteil der Objekte wird insbesondere mehr als 50%, bevorzugt mehr als 70%, besonders bevorzugt mehr als 90% der Objekte verstanden. Beispielsweise liegt der Abstand zwischen jeweils zwei benachbarten Objekten des zweiten Objektstroms jeweils oder im Mittel in dem jeweiligen Bereich.

In einer beispielhaften Ausführungsform sind das erste Fördermittel und das zweite Fördermittel unmittelbar hintereinander angeordnet sind. Insbesondere ist kein weiteres Fördermittel zwischen dem ersten und dem zweiten Fördermittel angeordnet. Allerdings können vor dem ersten Fördermittel und/oder nach dem zweiten Fördermittel weitere Fördermittel vorgesehen sein.

In einer beispielhaften Ausführungsform umfassen das erste Fördermittel und das zweite Fördermittel jeweils ein Förderband oder sind als ein solches ausgebildet.

Grundsätzlich ist jedoch auch denkbar, dass andere Fördermittel, deren Geschwindigkeit einstellbar ist, vorgesehen sind (beispielsweise Rollenförderer).

In einer beispielhaften Ausführungsform sind die Objekte Packstücke und der erste Objektstrom und der zweiter Objektstrom jeweils ein Packstückstrom.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

In den Figuren zeigt:

Fig. 1    eine schematische Darstellung einer beispielhaften Ausführungsform eines erfindungsgemäßen Systems;

Fig. 2    ein Ablaufdiagramm mit Verfahrensschritten einer beispielhaften Ausführungsform des erfindungsgemäßen Verfahrens; und

Fig. 3    ein Ablaufdiagramm mit Verfahrensschritten einer beispielhaften zweiten Ausführungsform des erfindungsgemäßen Verfahrens.

DETAILLIERTE BESCHREIBUNG EINIGER BEISPIELHAFTER AUSFÜHRUNGSFORMEN DER ERFINDUNG

Die vorliegende Erfindung wird im Folgenden anhand von beispielhaften Ausführungsformen beschrieben, die eine vorteilhafte Singulation und damit einen hohen Durchsatz von Packstücken ermöglichen.

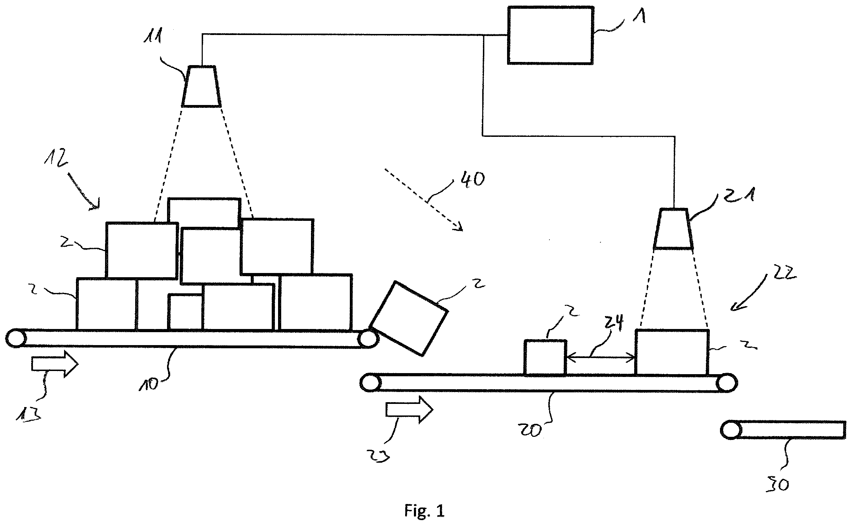

Figur 1 zeigt ein Ausführungsbeispiel eines erfindungsgemäßen Systems. Das System umfasst eine Kontrolleinrichtung 1, zum Beispiel eine Steuer- oder Regeleinrichtung. Zudem umfasst das System ein erstes Fördermittel 10 und ein zweites Fördermittel 20 einer Förderanlage. Zudem umfasst das System als Sensoren ausgebildete Erfassungsmittel 11, 12 angeordnet zum Ermitteln einer ersten und einer zweiten Geometrieinformation.

Die Kontrolleinrichtung 1 ist eine Ausführungsform einer erfindungsgemäßen Vorrichtung. Die Kontrolleinrichtung 1 kann eine Spezialvorrichtung sein, oder ein entsprechend eingerichteter herkömmlicher Computer oder Server. Die Kontrolleinrichtung 1 umfasst einen Prozessor, einen Programmspeicher, einen Arbeitsspeicher, eine Benutzerschnittstelle und verschiedene Kommunikationsschnittstellen. Der Prozessor ist mit jeder dieser Komponenten verbunden.

Der Programmspeicher ist ein nicht-flüchtiger Speicher, der Computerprogramme mit Programmanweisungen speichert. Er kann zusätzlich Parameter und andere Daten speichern. Der Prozessor ist dazu eingerichtet, Programmanweisungen aus dem Programmspeicher auszulesen und auszuführen. Der Arbeitsspeicher kann ein flüchtiger Speicher sein, der vom Prozessor zum Zwischenspeichern von Programmanweisungen und Daten genutzt werden kann.

Die Benutzerschnittstelle kann beliebige Ein- und Ausgabemittel aufweisen, wie zum Beispiel einen Bildschirm, ggf. mit Touchscreen, Lautsprecher, eine Tastatur und/oder Knöpfe, usw. Die Benutzerschnittstelle kann für Instandhaltungs-, Optimierungs- und Betriebszwecke vorgesehen sein.

Die Kommunikationsschnittstellen können mindestens eine Schnittstelle für eine Verbindung mit den Erfassungsmitteln 11, 21 und mindestens eine Schnittstelle für eine Verbindung mit den Fördermitteln 10, 20 umfassen. Alle Schnittstellen können drahtgebunden oder drahtlos sein. Eine Schnittstelle für drahtlose Verbindungen - z. B. eine WLAN Schnittstelle - könnte auch für sämtliche vorgesehenen drahtlosen Verbindungen unter Verwendung unterschiedlicher Kanäle gemeinsam genutzt werden. Die Kontrolleinrichtung 1 kann verschiedene weitere Komponenten umfassen, beispielsweise einen weiteren Speicher, in dem Vorgaben einer Bedienperson und andere Daten gespeichert werden können. Die Kontrolleinrichtung 1 kann speziell den Fördermitteln 10, 20 zugeordnet sein oder auch weiteren Fördermitteln der Förderanlage. In letzterem Fall sind Schnittstellen für eine Kommunikation mit den weiteren Fördermitteln und möglichen Erfassungsmitteln vorhanden.

Die Fördermittel 10, 20 sind hier jeweils als Förderband ausgebildet und unmittelbar hintereinander angeordnet. Die Förderanlage kann auch noch weitere Fördermittel umfassen, etwa das teilweise dargestellte Förderband 30.

Auf dem ersten Förderband 10 wird ein erster Objektstrom in Form eines Packstückstroms 12 von mehreren Objekten in Form von Packstücken 2 mit einer ersten Geschwindigkeit transportiert, was durch Pfeil 13 angedeutet ist. Auf dem zweiten Förderband 20 wird ein zweiter Packstückstrom 22 von mehreren Packstücken 2 mit einer zweiten Geschwindigkeit transportiert, was durch Pfeil 23 angedeutet ist.

Der erste Packstückstrom 12 umfasst dabei Packstücke 2, welche zumindest teilweise sowohl aufeinander als auch nebeneinander in einem 3D-Bulk auf dem ersten Förderband 10 transportiert werden.

Die Packstücke 2 des ersten Packstückstroms 12 werden an ein Ende des ersten Förderbands 10 transportiert. Dabei fallen die Packstücke 2 am Ende des ersten Förderbands 10 auf das zweite Förderband 20, wie durch Pfeil 40 dargestellt.

Das erste Förderband 10 und das zweite Förderband 20 sind dabei derart angeordnet, dass die im ersten Packstückstrom 12 auf dem ersten Förderband 10 aufeinander transportierten Packstücke 2 durch das Fallen (Pfeil 40) auf das zweite Förderband 20 derart verteilt werden, dass die zuvor im ersten Packstückstrom 12 aufeinander transportierten Packstücke im zweiten Packstückstrom 22 auf dem zweiten Förderband 20 zumindest teilweise nicht mehr aufeinander transportiert werden. Stattdessen werden im zweiten Packstückstrom 22 die Packstücke 12 im Wesentlichen als 2D-Bluk nebeneinander und hintereinander auf dem zweiten Förderband 20 transportiert.

Um eine vorteilhafte Verteilung der Packstücke auf dem zweiten Förderband 20 (und beim weiteren Transport der Packstücke 2) und damit einen gesteigerten Durchsatz der Förderanlage zu erreichen kann, das System Ausführungsbeispiele des erfindungsgemäßen Verfahrens ausführen.

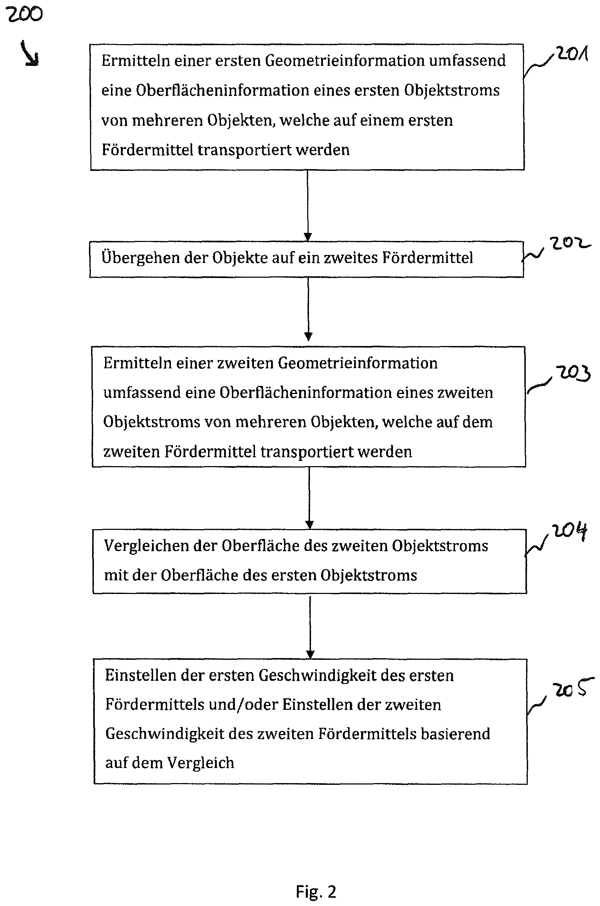

Fig. 2 zeigt ein Ablaufdiagramm 200 mit Verfahrensschritten 201 - 205 einer beispielhaften Ausführungsform des erfindungsgemäßen Verfahrens.

Mithilfe des Sensors 11 kann die Vorrichtung 1 eine erste Geometrieinformation, insbesondere ein Maß für die Größe der Oberfläche des ersten Packstückstroms 12 ermitteln (Aktion 201). Anschließend gehen die Pakete auf das zweite Fördermittel 20 über (Aktion 202).

Mithilfe des Sensors 21 kann die Vorrichtung 1 eine zweite Geometrieinformation, insbesondere ein Maß für die Größe der Oberfläche des zweiten Packstückstroms 22 ermitteln (Aktion 203).

Auf dieser Basis kann insbesondere durch Vergleich ermittelt werden, ob sich die Oberfläche des zweiten Packstückstroms 22 im Vergleich zu der Oberfläche des ersten Packstückstroms 12 vergrößert (Aktion 204).

Auf Basis der Änderung der Oberfläche von dem ersten Packstückstrom 12 zum zweiten Packstückstrom 22 kann nun die erste Geschwindigkeit 13 des ersten Förderbandes 10 und/oder die zweite Geschwindigkeit 23 des zweiten Förderbandes 20 eingestellt werden (Aktion 205).

Es hat sich gezeigt, dass durch das Einstellen der ersten und/oder der zweiten Geschwindigkeit 13, 23 auf Basis dieser Eingangsgrößen gezielt eine Lückenverteilung zwischen den Packstücken 2 des zweiten Packstückstroms 22 eingestellt werden kann. Der Abstand 24 zwischen jeweils zwei benachbarten Packstücken 2 des zweiten Packstückstroms 22 liegt für die Packstücke beispielsweise bevorzugt zwischen 1,2m und 5m.

Es hat sich gezeigt, dass der Durchsatz insbesondere dann sinkt, wenn zu viele Packstücke mit einer Lücke von weniger als 1,2m transportiert werden. Wird der Abstand der Packstücke auf einen Bereich zwischen 1,2m und 5m gebracht, dass eine Steigerung des Durchsatzes erreicht werden kann.

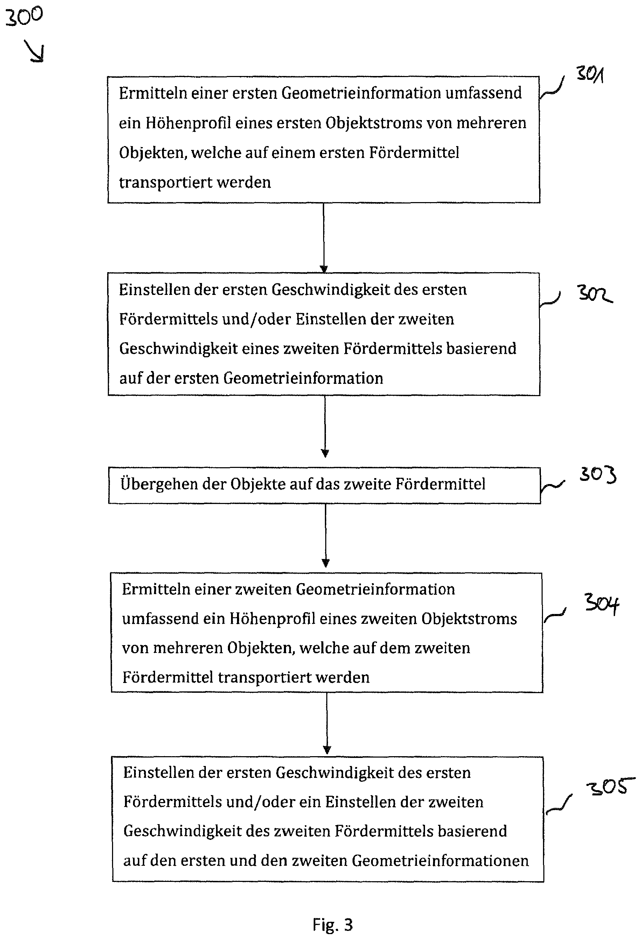

Fig. 3 zeigt ein Ablaufdiagramm 300 mit Verfahrensschritten 301 - 305 einer beispielhaften zweiten Ausführungsform des erfindungsgemäßen Verfahrens.

Mithilfe des Sensors 11 ermittelt die Vorrichtung 1 zunächst erste Geometrieinformation umfassend ein Höhenprofil des ersten Packstückstroms 12 (Aktion 301).

Basierend auf dem Zusammenhang $v = Q \cdot V_n / (B \cdot H)$ kann nun mittels des ermittelten Höhenprofils, insbesondere der Breite und Höhe, das heißt der Querschnittsfläche $B \cdot H$ des Packstückstroms 12 und einer Annahme für das Volumen $V_n$ eines Paketstücks 2 in Abhängigkeit des geforderten Durchsatzes Q die erste Geschwindigkeit 13 des ersten Förderbandes 10 und/oder die zweiten Geschwindigkeit 23 des zweiten Förderbandes 20 eingestellt werden (Aktion 302).

Anschließend gehen die Pakete auf das zweite Fördermittel 20 über (Aktion 303). Mithilfe des Sensors 21 ermittelt die Vorrichtung 1 eine zweite Geometrieinformation umfassend ein Höhenprofil des zweiten Packstückstroms 22 (Aktion 204).

Aufgrund der erfolgten Vereinzelung kann mittels des Höhenprofils auch Größeninformation einzelner Packstücke ermittelt werden, sodass insbesondere die Annahme für $V_n$ überprüft werden kann.

Bei Bedarf, sofern beispielsweise die Annahme für $V_n$ korrigiert wird, kann nun erneut ein Einstellen der ersten Geschwindigkeit 13 des ersten Förderbandes 10 und/oder ein Einstellen der zweiten Geschwindigkeit 23 des zweiten Förderbandes 20 basierend auf den ersten und den zweiten Geometrieinformationen erfolgen (Aktion 205).

Weiterhin können weitere optionale Verfahrensschritte, wie etwa ein Ermitteln einer Information repräsentativ für eine Flächenbelegung des ersten und/oder des zweiten Förderbandes oder ein Ermitteln eines Durchsatzes der Packstücke durchgeführt werden.

**Patentansprüche**

1.  Verfahren, umfassend:

    - Ermitteln von erster Geometrieinformation eines ersten Objektstroms (12) von mehreren Objekten (2), welche auf einem ersten Fördermittel (10) transportiert werden; und
    - Ermitteln von zweiter Geometrieinformation eines zweiten Objektstroms (22) von mehreren Objekten (2), welche auf einem zweiten Fördermittel (20) transportiert werden;

- wobei das erste Fördermittel (10) dazu eingerichtet ist, Objekte (2) mit einer ersten Geschwindigkeit (13) zu transportieren, und das zweite Fördermittel (20) dazu eingerichtet ist, Objekte (2) mit einer zweiten Geschwindigkeit (23) zu transportieren,

- wobei das erste Fördermittel (10) und das zweite Fördermittel (20) derart angeordnet sind, dass die von dem ersten Fördermittel (10) transportierten Objekte (2) auf das zweite Fördermittel (20) durch Fallen (40) von dem ersten Fördermittel (10) auf das zweite Fördermittel (20) unter Einwirkung der Schwerkraft übergehen; und

- wobei das Verfahren ferner ein Einstellen der ersten Geschwindigkeit (13) des ersten Fördermittels (10) und/oder ein Einstellen der zweiten Geschwindigkeit (23) des zweiten Fördermittels (20) basierend auf der ermittelten ersten Geometrieinformation und/oder der ermittelten zweiten Geometrieinformation umfasst; und

- wobei die erste Geometrieinformation eine erste Höheninformation des ersten Objektstroms (12) umfasst, und die zweite Geometrieinformation eine zweite Höheninformation des zweiten Objektstroms (22) umfasst.

2. Verfahren nach Anspruch 1, **dadurch gekennzeichnet, dass** das erste Fördermittel dazu eingerichtet ist, die Objekte (2) des ersten Objektstroms (12) an ein Ende des ersten Fördermittels (10) zu transportieren und die Objekte (2) am Ende des ersten Fördermittels (10) auf das zweite Fördermittel (20) übergehen.

3. Verfahren nach einem der vorangegangen Ansprüche, **dadurch gekennzeichnet, dass** der erste Objektstrom (12) Objekte (2) umfasst, welche zumindest teilweise aufeinander und/oder nebeneinander auf dem ersten Fördermittel (10) transportiert werden.

4. Verfahren nach einem der vorangegangen Ansprüche, **dadurch gekennzeichnet, dass** das erste Fördermittel (10) und das zweite Fördermittel (20) derart angeordnet sind, dass im ersten Objektstrom (12) auf dem ersten Fördermittel (10) aufeinander transportierte Objekte (2) durch das Übergehen auf das zweite Fördermittel (20) derart verteilt werden können, dass diese zuvor im ersten Objektstrom (12) aufeinander transportierten Objekte (2) im zweiten Objektstrom (22) auf dem zweiten Fördermittel (20) zumindest teilweise nicht mehr aufeinander transportiert werden.

5. Verfahren nach einem der vorangegangen Ansprüche, **dadurch gekennzeichnet, dass** im zweiten Objektstrom (22) die Objekte (2) im Wesentlichen nebeneinander und/oder hintereinander auf dem zweiten Fördermittel (20) transportiert werden.

6. Verfahren nach einem der vorangegangen Ansprüche, **dadurch gekennzeichnet, dass** die erste Geometrieinformation zusätzlich eine erste Oberflächeninformation, insbesondere repräsentativ für eine Größe der Oberfläche des ersten Objektstroms (12) umfasst und/oder dass die zweite Geometrieinformation zusätzlich eine zweite Oberflächeninformation, insbesondere repräsentativ für eine Größe der Oberfläche des zweiten Objektstroms (22) umfasst.

7. Verfahren nach einem der vorangegangenen Ansprüche, **dadurch gekennzeichnet, dass** die erste Geometrieinformation zusätzlich eine erste Ausdehnungsinformation des ersten Objektstroms (12) umfasst und/oder dass die zweite Geometrieinformation zusätzlich eine zweite Ausdehnungsinformation des zweiten Objektstroms (12) umfasst.

8. Verfahren nach Anspruch 7, **dadurch gekennzeichnet, dass** die erste und/oder die zweite Ausdehnungsinformation repräsentativ für einen Durchmesser des jeweiligen Objektstroms (12, 22) ist.

9. Verfahren nach Anspruch 6 und 8, **dadurch gekennzeichnet, dass** das Verfahren weiterhin umfasst:

- Ermitteln eines ersten Verhältnisses von Oberfläche zu Durchmesser des ersten Objektstroms (12) basierend auf der ersten Oberflächeninformation und der ersten Ausdehnungsinformation;
- Ermitteln eines zweiten Verhältnisses von Oberfläche zu Durchmesser des zweiten Objektstroms (22) basierend auf der zweiten Oberflächeninformation und der zweiten Ausdehnungsinformation; und

wobei das Einstellen der ersten Geschwindigkeit (13) des ersten Fördermittels (10) und/oder das Einstellen der zweiten Geschwindigkeit (23) des zweiten Fördermittels (20) auf dem ermittelten ersten Verhältnis und auf dem ermittelten zweiten Verhältnis basiert.

10. Verfahren nach Anspruch 6, **dadurch gekennzeichnet, dass** das Einstellen der ersten Geschwindigkeit (13) und/oder das Einstellen der zweiten Geschwindigkeit (23) auf einem Vergleich der Oberfläche des zweiten Objektstroms (22) mit der Oberfläche des ersten Objektstroms (12) basiert.

**11.** Verfahren nach Anspruch 9, **dadurch gekennzeichnet, dass** das Einstellen der ersten Geschwindigkeit und/oder das Einstellen der zweiten Geschwindigkeit auf einem Vergleicht des Verhältnisses der Oberfläche zum Durchmesser des ersten Objektstroms (12) zu dem Verhältnis der Oberfläche zum Durchmesser des zweiten Objektstroms (22) basiert.

**12.** Verfahren nach einem der vorangegangenen Ansprüche, **dadurch gekennzeichnet, dass** erste Höheninformation ein Höhenprofil des ersten Objektstroms (12) ist, und/oder dass die zweite Höheninformation ein Höhenprofil des zweiten Objektstroms (22) ist.

**13.** Verfahren nach Anspruch 7, **dadurch gekennzeichnet, dass** die erste Ausdehnungsinformation repräsentativ für eine Breite des ersten Objektstroms (12) ist und/oder die zweite Ausdehnungsinformation repräsentativ für eine Breite des zweiten Objektstroms (22) ist.

**14.** Verfahren nach Anspruch 12 und 13, **dadurch gekennzeichnet, dass** das Einstellen der ersten Geschwindigkeit (13) des ersten Fördermittels (10) und/oder ein Einstellen der zweiten Geschwindigkeit (23) des zweiten Fördermittels (20) auf der ersten Höheninformation des ersten Objektstroms (12) und/oder der ersten Ausdehnungsinformation repräsentativ für eine Breite des ersten Objektstroms basiert.

**15.** Verfahren nach einem der vorangegangenen Ansprüche, **dadurch gekennzeichnet, dass** das Einstellen der ersten Geschwindigkeit (13) des ersten Fördermittels (10) und/oder das Einstellen der zweiten Geschwindigkeit (23) des zweiten Fördermittels (20) auf einer Annahme einer Größe eines oder mehrerer Objekte (2) des ersten Objektstroms (12) basiert.

**16.** Verfahren nach einem der vorangegangenen Ansprüche, **dadurch gekennzeichnet, dass** das Einstellen der ersten Geschwindigkeit (13) des ersten Fördermittels (10) und/oder das Einstellen der zweiten Geschwindigkeit (23) des zweiten Fördermittels (20) auf einem geforderten Durchsatz der Objekte (2) basiert.

**17.** Verfahren nach einem der vorangegangenen Ansprüche, **dadurch gekennzeichnet, dass** die zweite Geometrieinformation eine Größeninformation eines oder mehrerer Objekte (2) des zweiten Objektstroms (22) umfasst.

**18.** Verfahren nach einem der vorangegangenen Ansprüche, **dadurch gekennzeichnet, dass** das Verfahren weiterhin umfasst:

- Ermitteln einer Information repräsentativ für eine Flächenbelegung des ersten und/oder des zweiten Fördermittels (10, 20).

**19.** Verfahren nach einem der vorangegangenen Ansprüche, **dadurch gekennzeichnet, dass** das Verfahren weiterhin umfasst:

- Ermitteln eines Durchsatzes der Objekte (2).

**20.** Verfahren nach einem der vorangegangenen Ansprüche, **dadurch gekennzeichnet, dass** das Verhältnis der ersten Geschwindigkeit (13) des ersten Fördermittels (10) zur zweiten Geschwindigkeit (23) des zweiten Fördermittels (20) im Wesentlichen konstant bleibt.

**21.** Verfahren nach einem der vorangegangenen Ansprüche, **dadurch gekennzeichnet, dass** das Verhältnis der ersten Geschwindigkeit (13) des ersten Fördermittels (10) zur zweiten Geschwindigkeit (23) des zweiten Fördermittels (20) zwischen 1:1,5 und 1: 3, vorzugsweise bei im Wesentlichen 1:2 liegt.

**22.** Verfahren nach einem der vorangegangenen Ansprüche, **dadurch gekennzeichnet, dass** das Einstellen der ersten und/oder zweiten Geschwindigkeit (13, 23) auf einer Berechnung und/oder einer Umsetzungstabelle basiert.

**23.** Verfahren nach einem der vorangegangenen Ansprüche, **dadurch gekennzeichnet, dass** durch das Einstellen der ersten und/oder der zweiten Geschwindigkeit gezielt eine Abstandsverteilung zwischen den Objekten (2) des zweiten Objektstroms (20) eingestellt wird.

**24.** Verfahren nach einem der vorangegangenen Ansprüche, **dadurch gekennzeichnet, dass** die erste und/oder die zweite Geschwindigkeit so eingestellt werden, dass der Abstand (24) zwischen jeweils zwei benachbarten Objekten (2) des zweiten Objektstroms (22) für einen Großteil der Objekte (2) zwischen 0,5m und 7m, vorzugsweise zwischen 1m und 6m, besonders bevorzugt zwischen 1,2m und 5m liegt.

25. Verfahren nach einem der vorangegangenen Ansprüche, **dadurch gekennzeichnet, dass** das erste Fördermittel (10) und das zweite Fördermittel (20) unmittelbar hintereinander angeordnet sind.

26. Verfahren nach einem der vorangegangenen Ansprüche, **dadurch gekennzeichnet, dass** das erste Fördermittel (10) und das zweite Fördermittel (20) jeweils ein Förderband umfassen.

27. Verfahren nach einem der vorangegangenen Ansprüche, **dadurch gekennzeichnet, dass** die Objekte (2) Packstücke sind und der erste Objektstrom (12) und der zweiter Objektstrom (22) jeweils ein Packstückstrom sind.

28. System umfassend

   - eine Vorrichtung (1) umfassend Mittel zum Veranlassen des Systems, das Verfahren nach einem der Ansprüche 1 bis 27 auszuführen,
   - das erste Fördermittel (10) und das zweite Fördermittel (20), und
   - Erfassungsmittel (11, 21) angeordnet zum Erfassen der ersten und der zweiten Geometrieinformation.

29. System nach Anspruch 28, wobei die Vorrichtung (1)

   - ein Modul für eine Kontrolleinrichtung oder
   - eine Kontrolleinrichtung oder
   - ein Computer oder
   - ein Server ist oder umfasst.

30. Computerprogramm mit Programmanweisungen, die dazu eingerichtet sind, ein System gemäß Anspruch 28 oder 29 zu veranlassen, das Verfahren nach einem der Ansprüche 1 bis 27 durchzuführen, wenn sie von mindestens einem Prozessor ausgeführt werden.

**Claims**

1. Method, comprising:

   - determining first geometry information of a first object stream (12) of a plurality of objects (2) transported on a first conveying means (10); and
   - determining second geometry information of a second object stream (22) of a plurality of objects (2) transported on a second conveyor means (20);
   - wherein the first conveyor means (10) is arranged to transport objects (2) at a first speed (13) and the second conveyor means (20) is arranged to transport objects (2) at a second speed (23),
   - wherein the first conveyor means (10) and the second conveyor means (20) are arranged such that the objects (2) transported by the first conveyor means (10) transfer to the second conveyor means (20) by falling (40) from the first conveyor means (10) to the second conveyor means (20) under the action of gravity; and
   - wherein the method further comprises adjusting the first speed (13) of the first conveyor (10) and/or adjusting the second speed (23) of the second conveyor (20) based on the determined first geometry information and/or the determined second geometry information; and
   - wherein the first geometry information comprises first height information of the first object stream (12), and the second geometry information comprises second height information of the second object stream (22).

2. Method according to claim 1, **characterized in that** the first conveying means is arranged to transport the objects (2) of the first object stream (12) to one end of the first conveying means (10) and the objects (2) move to the second conveying means (20) at the end of the first conveying means (10).

3. Method according to one of the preceding claims, **characterized in that** the first object stream (12) comprises objects (2) which are at least partially transported on top of each other and/or next to each other on the first conveyor means (10).

4. Method according to one of the preceding claims, **characterized in that** the first conveying means (10) and the second conveying means (20) are arranged in such a way that objects (2) transported one on top of the other in the first object stream (12) on the first conveying means (10) can be distributed by passing over onto the second conveying means (20) in such a way that these objects (2) previously transported one on top of the other in the first object stream (12) are at least partially no longer transported one on top of the other in the second object stream (22) on the second conveying means (20).

5. Method according to one of the preceding claims, **characterised in that** in the second object stream (22) the objects (2) are transported substantially next to each other and/or one behind the other on the second conveyor means (20).

6. Method according to one of the preceding claims, **characterized in that** the first geometry information additionally comprises a first surface information, in particular representative of a size of the surface of the first object stream (12) and/or that the second geometry information additionally comprises a second surface information, in particular representative of a size of the surface of the second object stream (22).

7. Method according to any one of the preceding claims, **characterized in that** the first geometry information additionally comprises a first expansion information of the first object stream (12) and/or that the second geometry information additionally comprises a second expansion information of the second object stream (12).

8. Method according to claim 7, **characterized in that** the first and/or the second expansion information is representative of a diameter of the respective object stream (12, 22).

9. Method according to claim 6 and 8, **characterized in that** the method further comprises:

  - determining a first surface area to diameter ratio of the first object stream (12) based on the first surface area information and the first extension information;
  - determining a second surface area to diameter ratio of the second object stream (22) based on the second surface area information and the second expansion information; and

  wherein the adjustment of the first speed (13) of the first conveyor (10) and/or the adjustment of the second speed (23) of the second conveyor (20) is based on the determined first ratio and on the determined second ratio.

10. Method according to claim 6, **characterized in that** the setting of the first speed (13) and/or the setting of the second speed (23) is based on a comparison of the surface of the second object stream (22) with the surface of the first object stream (12).

11. Method according to claim 9, **characterized in that** the adjustment of the first speed and/or the adjustment of the second speed is based on a comparison of the ratio of the surface area to the diameter of the first object stream (12) to the ratio of the surface area to the diameter of the second object stream (22).

12. Method according to any one of the preceding claims, **characterised in that** first height information is a height profile of the first object stream (12), and/or that second height information is a height profile of the second object stream (22).

13. Method according to claim 7, **characterized in that** the first expansion information is representative of a width of the first object stream (12) and/or the second expansion information is representative of a width of the second object stream (22).

14. Method according to claim 12 and 13, **characterized in that** the adjustment of the first speed (13) of the first conveying means (10) and/or an adjustment of the second speed (23) of the second conveying means (20) is based on the first height information of the first object stream (12) and/or the first expansion information representative of a width of the first object stream.

15. Method according to any one of the preceding claims, **characterized in that** the setting of the first speed (13) of the first conveyor (10) and/or the setting of the second speed (23) of the second conveyor (20) is based on an assumption of a size of one or more objects (2) of the first object stream (12).

16. Method according to any one of the preceding claims, **characterised in that** the setting of the first speed (13) of the first conveyor (10) and/or the setting of the second speed (23) of the second conveyor (20) is based on a required throughput of the objects (2).

17. Method according to any one of the preceding claims, **characterized in that** the second geometry information comprises size information of one or more objects (2) of the second object stream (22).

18. Method according to any one of the preceding claims, **characterized in that** the method further comprises:

- determining information representative of an area occupancy of the first and/or the second conveyor means (10, 20).

19. Method according to any one of the preceding claims, **characterized in that** the method further comprises:

- determining a throughput of the objects (2).

20. Method according to any one of the preceding claims, **characterised in that** the ratio of the first speed (13) of the first conveyor (10) to the second speed (23) of the second conveyor (20) remains substantially constant.

21. Method according to any one of the preceding claims, **characterized in that** the ratio of the first speed (13) of the first conveyor means (10) to the second speed (23) of the second conveyor means (20) is between 1:1.5 and 1: 3, preferably substantially 1:2.

22. Method according to any one of the preceding claims, **characterised in that** the setting of the first and/or second speed (13, 23) is based on a calculation and/or a conversion table.

23. Method according to one of the preceding claims, **characterised in that** a distance distribution between the objects (2) of the second object stream (20) is specifically set by setting the first and/or the second speed.

24. Method according to one of the preceding claims, **characterized in that** the first and/or the second velocity are set in such a way that the distance (24) between in each case two adjacent objects (2) of the second object stream (22) is between 0.5m and 7m, preferably between 1m and 6m, particularly preferably between 1.2m and 5m, for a majority of the objects (2).

25. Method according to one of the preceding claims, **characterised in that** the first conveyor means (10) and the second conveyor means (20) are arranged directly behind each other.

26. Method according to any one of the preceding claims, **characterized in that** the first conveyor means (10) and the second conveyor means (20) each comprise a conveyor belt.

27. Method according to one of the preceding claims, **characterised in that** the objects (2) are packages and the first object stream (12) and the second object stream (22) are each a package stream.

28. System comprising

- an apparatus (1) comprising means for causing the system to perform the method according to any one of claims 1 to 27,
- the first conveyor means (10) and the second conveyor means (20), and
- detection means (11, 21) arranged to detect the first and second geometry information.

29. System according to claim 28, wherein the apparatus (1) is or includes

- a module for a control device or
- a control device or
- a computer or
- a server.

30. Computer program comprising program instructions arranged to cause a system according to claim 28 or 29 to perform the method according to any one of claims 1 to 27 when executed by at least one processor.

**Revendications**

1. Procédé comportant de :

    - déterminer une première information de géométrie d'un premier flux d'objets (12) d'une pluralité d'objets (2) qui sont transportés sur un premier convoyeur (10), et
    - déterminer une seconde information de géométrie d'un second flux d'objets (22) d'une pluralité d'objets (2) qui sont transportés sur un second convoyeur (20),
    - dans lequel le premier convoyeur (10) est configuré pour transporter des objets (2) à une première vitesse (13), et le second convoyeur (20) est configuré pour transporter des objets (2) à une seconde vitesse (23),
    - dans lequel le premier convoyeur (10) et le second convoyeur (20) sont agencés de telle sorte que les objets (2) transportés par le premier convoyeur (10) passent sur le second convoyeur (20) en tombant (40), sous l'effet de la force de gravité, à partir du premier convoyeur (10) sur le second convoyeur (20), et
    - dans lequel le procédé comporte en outre un réglage de la première vitesse (13) du premier convoyeur (10) et/ou un réglage de la seconde vitesse (23) du second convoyeur (20) sur la base de la première information de géométrie déterminée et/ou de la seconde information de géométrie déterminée, et
    - dans lequel la première information de géométrie comporte une première information de hauteur du premier flux d'objets (12), et la seconde information de géométrie comporte une seconde information de hauteur du second flux d'objets (22).

2. Procédé selon la revendication 1, **caractérisé en ce que** le premier convoyeur est configuré pour transporter les objets (2) du premier flux d'objets (12) jusqu'à une extrémité du premier convoyeur (10) et les objets (2) passent sur le second convoyeur (20) à l'extrémité du premier convoyeur (10).

3. Procédé selon l'une des revendications précédentes, **caractérisé en ce que** le premier flux d'objets (12) comporte des objets (2) qui sont transportés au moins partiellement les uns sur les autres et/ou les uns à côté des autres sur le premier convoyeur (10).

4. Procédé selon l'une des revendications précédentes, **caractérisé en ce que** le premier convoyeur (10) et le second convoyeur (20) sont agencés de telle sorte que des objets (2) transportés les uns sur les autres dans le premier flux d'objets (12) sur le premier convoyeur (10) peuvent être distribués en passant sur le second convoyeur (20) de telle sorte que ces objets (2) précédemment transportés les uns sur les autres dans le premier flux d'objets (12) ne sont plus transportés au moins partiellement les uns sur les autres dans le second flux d'objets (22) sur le second convoyeur (20).

5. Procédé selon l'une des revendications précédentes, **caractérisé en ce que** dans le second flux d'objets (22), les objets (2) sont transportés sensiblement les uns à côté des autres et/ou les uns derrière les autres sur le second convoyeur (20).

6. Procédé selon l'une des revendications précédentes, **caractérisé en ce que** la première information de géométrie comporte de plus une première information de surface, en particulier représentative d'une taille de la surface du premier flux d'objets (12) et/ou **en ce que** la seconde information de géométrie comporte de plus une seconde information de surface, en particulier représentative d'une taille de la surface du second flux d'objets (22).

7. Procédé selon l'une des revendications précédentes, **caractérisé en ce que** la première information de géométrie comporte en outre une première information d'étendue du premier flux d'objets (12) et/ou **en ce que** la seconde information de géométrie comporte en outre une seconde information d'étendue du second flux d'objets (12).

8. Procédé selon la revendication 7, **caractérisé en ce que** la première et/ou seconde information d'étendue est représentative d'un diamètre du flux d'objets (12, 22) respectif.

9. Procédé selon les revendications 6 et 8, **caractérisé en ce que** le procédé comporte en outre de :

    - déterminer un premier rapport de la surface sur le diamètre du premier flux d'objets (12) sur la base de la première information de surface et de la première information d'étendue,
    - déterminer un second rapport de la surface sur le diamètre du second flux d'objets (22) sur la base de la seconde information de surface et de la seconde information d'étendue, et
    - dans lequel le réglage de la première vitesse (13) du premier convoyeur (10) et/ou le réglage de la seconde vitesse (23) du second convoyeur (20) est basé sur le premier rapport déterminé et sur le second rapport déterminé.

10. Procédé selon la revendication 6, **caractérisé en ce que** le réglage de la première vitesse (13) et/ou le réglage de la seconde vitesse (23) est basé sur une comparaison de la surface du second flux d'objets (22) avec la surface du premier flux d'objets (12).

11. Procédé selon la revendication 9, **caractérisé en ce que** le réglage de la première vitesse (13) et/ou le réglage de la seconde vitesse (23) est basé sur une comparaison du rapport de la surface sur le diamètre du premier flux d'objets (12) avec le rapport de la surface sur le diamètre du second flux d'objets (22).

12. Procédé selon l'une des revendications précédentes, **caractérisé en ce que** la première information de hauteur est un profil de hauteur du premier flux d'objets (12) et/ou **en ce que** la seconde information de hauteur est un profil de hauteur du second flux d'objets (22).

13. Procédé selon la revendication 7, **caractérisé en ce que** la première information d'étendue est représentative d'une largeur du premier flux d'objets (12) et/ou la seconde information d'étendue est représentative d'une largeur du second flux d'objets (22).

14. Procédé selon les revendications 12 et 13, **caractérisé en ce que** le réglage de la première vitesse (13) du premier convoyeur (10) et/ou le réglage de la seconde vitesse (23) du second convoyeur (20) est basé sur la première information de hauteur du premier flux d'objets (12) et/ou sur la première information d'étendue représentative d'une largeur du premier flux d'objets.

15. Procédé selon l'une des revendications précédentes, **caractérisé en ce que** le réglage de la première vitesse (13) du premier convoyeur (10) et/ou le réglage de la seconde vitesse (23) du second convoyeur (20) est basé sur une hypothèse de taille d'un ou plusieurs objets (2) du premier flux d'objets (12).

16. Procédé selon l'une des revendications précédentes, **caractérisé en ce que** le réglage de la première vitesse (13) du premier convoyeur (10) et/ou le réglage de la seconde vitesse (23) du second convoyeur (20) est basé sur un débit exigé des objets (2).

17. Procédé selon l'une des revendications précédentes, **caractérisé en ce que** la seconde information de géométrie comporte une information de taille d'un ou plusieurs objets (2) du second flux d'objets (22).

18. Procédé selon l'une des revendications précédentes, **caractérisé en ce que** le procédé comporte en outre de :

   - déterminer une information représentative d'une couverture de surface du premier et/ou second convoyeur (10, 20).

19. Procédé selon l'une des revendications précédentes, **caractérisé en ce que** le procédé comporte en outre de :

   - déterminer un débit des objets (2).

20. Procédé selon l'une des revendications précédentes, **caractérisé en ce que** le rapport de la première vitesse (13) du premier convoyeur (10) sur la seconde vitesse (23) du second convoyeur (20) reste sensiblement constant.

21. Procédé selon l'une des revendications précédentes, **caractérisé en ce que** le rapport de la première vitesse (13) du premier convoyeur (10) sur la seconde vitesse (23) du second convoyeur (20) est compris entre 1:1,5 et 1:3 et est de préférence sensiblement égal à 1:2.

22. Procédé selon l'une des revendications précédentes, **caractérisé en ce que** le réglage de la première et/ou seconde vitesse (13, 23) est basé sur un calcul et/ou sur une table de conversion.

23. Procédé selon l'une des revendications précédentes, **caractérisé en ce qu'**une répartition de la distance entre les objets (2) du second flux d'objets (20) est réglée spécifiquement par le réglage de la première et/ou seconde vitesse.

24. Procédé selon l'une des revendications précédentes, **caractérisé en ce que** la première et/ou la seconde vitesse sont réglées de telle sorte que la distance (24) entre deux objets (2) voisins du second flux d'objets (22) pour une majorité des objets (2) est respectivement comprise entre 0,5 m et 7 m, de manière préférée entre 1 m et 6 m, de manière particulièrement préférée entre 1,2 m et 5 m.

25. Procédé selon l'une des revendications précédentes, **caractérisé en ce que** le premier convoyeur (10) et le second convoyeur (20) sont agencés directement l'un derrière l'autre.

26. Procédé selon l'une des revendications précédentes, **caractérisé en ce que** le premier convoyeur (10) et le second convoyeur (20) comportent respectivement une bande de convoyage.

27. Procédé selon l'une des revendications précédentes, **caractérisé en ce que** les objets (2) sont des colis et le premier flux d'objets (12) et le second flux d'objets (22) sont respectivement un flux de colis.

28. Système comportant :

   - un dispositif (1) comportant des moyens pour permettre au système de mettre en oeuvre le procédé selon l'une des revendications 1 à 27,
   - le premier convoyeur (10) et le second convoyeur (20), et
   - des moyens de détection (11, 21) agencés pour détecter les première et seconde informations de géométrie.

29. Système selon la revendication 28, dans lequel le dispositif (1) est ou comporte :

   - un module pour un dispositif de contrôle ou
   - un dispositif de contrôle ou
   - un ordinateur ou
   - un serveur.

30. Programme informatique comportant des instructions de programme qui sont configurées pour permettre à un système selon la revendication 28 ou 29 de mettre en oeuvre le procédé selon l'une des revendications 1 à 27 lorsqu'elles sont exécutées par au moins un processeur.

Fig. 1

200

Ermitteln einer ersten Geometrieinformation umfassend eine Oberflächeninformation eines ersten Objektstroms von mehreren Objekten, welche auf einem ersten Fördermittel transportiert werden — 201

Übergehen der Objekte auf ein zweites Fördermittel — 202

Ermitteln einer zweiten Geometrieinformation umfassend eine Oberflächeninformation eines zweiten Objektstroms von mehreren Objekten, welche auf dem zweiten Fördermittel transportiert werden — 203

Vergleichen der Oberfläche des zweiten Objektstroms mit der Oberfläche des ersten Objektstroms — 204

Einstellen der ersten Geschwindigkeit des ersten Fördermittels und/oder Einstellen der zweiten Geschwindigkeit des zweiten Fördermittels basierend auf dem Vergleich — 205

Fig. 2

300

| Ermitteln einer ersten Geometrieinformation umfassend ein Höhenprofil eines ersten Objektstroms von mehreren Objekten, welche auf einem ersten Fördermittel transportiert werden | 301 |

| Einstellen der ersten Geschwindigkeit des ersten Fördermittels und/oder Einstellen der zweiten Geschwindigkeit eines zweiten Fördermittels basierend auf der ersten Geometrieinformation | 302 |

| Übergehen der Objekte auf das zweite Fördermittel | 303 |

| Ermitteln einer zweiten Geometrieinformation umfassend ein Höhenprofil eines zweiten Objektstroms von mehreren Objekten, welche auf dem zweiten Fördermittel transportiert werden | 304 |

| Einstellen der ersten Geschwindigkeit des ersten Fördermittels und/oder ein Einstellen der zweiten Geschwindigkeit des zweiten Fördermittels basierend auf den ersten und den zweiten Geometrieinformationen | 305 |

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0066280 A2

**In der Beschreibung aufgeführte Nicht-Patentliteratur**

- **HASSAN K. KHALIL.** Nonlinear Systems. Verlag Prentice-Hall